# EUROPÄISCHE PATENTANMELDUNG

(11) **EP 1 813 472 A1**
(43) Veröffentlichungstag der Anmeldung: **01.08.2007**
(21) Anmeldenummer: 07100900.5
(22) Anmeldetag: 22.01.2007
(51) Int. Cl.: B60P 3/20

(54) **Kühlfahrzeug**

(30) Priorität: 25.01.2006 DE 202006001243 U
(71) Anmelder: Brandt-Kühlfahrzeugbau GmbH & Co. KG, 32699 Extertal - Bösingfeld (DE)
(72) Erfinder: Brandt, Werner, 32699 Extertal-Bösingfeld (DE)
(74) Vertreter: Dantz, Jan Henning

(57) **Zusammenfassung**

Ein Kühlfahrzeug mit einem Kofferaufbau, der durch zwei Trennwände in drei Kühlkammern unterteilt werden kann, und der heckseitig mit einer Ladebordwand ausgestattet ist, und der mit am Dach (3) in Führungsschienen (8, 9) frei hängenden sowie verschiebbaren Streifenvorhängen (4, 5, 6, 7) versehen ist, soll so gestaltet werden, dass die Handhabung der Streifenvorhänge einfach und effektiv ist, wobei der freigegebene Bereich der Ladeöffnung so gering wie möglich sein soll. Darüber hinaus soll der Fahrer nicht behindert werden. Erfindungsgemäß ist die Breite jedes Streifenvorhanges (4, 5, 6, 7) geringer als die Breiten der durch die Trennwände gebildeten Kühlkammern. Es ist vorgesehen, dass der Kofferaufbau heckseitig mit vier Streifenvorhängen (4, 5, 6, 7) ausgerüstet ist.

Das erfindungsgemäße Kühlfahrzeug ist ein Auslieferungsfahrzeug für Kühl- und Gefriergut.

## Beschreibung

Die Erfindung bezieht sich auf ein Kühlfahrzeug mit einem Kofferaufbau, der durch mehrere in Längsrichtung verlaufende Trennwände in Kühlkammern unterteilbar ist, und welches heckseitig mit einer Ladebordwand ausgestattet ist, die in eine die heckseitige Ladeöffnung verschließende und freigebende Stellung bringbar sowie zum Be- und Entladen anheb- und absenkbar ist, und welches außerdem zur Kälterückhaltung mit mehreren, innerhalb der Ladeöffnung verschiebbaren Streifenvorhängen versehen ist, die am Dach des Fahrzeugs in Führungsschienen freihängend verschiebbar geführt sind.

Mit dem in Rede stehenden Kühlfahrzeug können durch eine entsprechende Auslegung der Kühlaggregate ausschließlich Kühlgut, ausschließlich Gefriergut, aber auch sowohl Kühlgut als auch Gefriergut von einem Auslieferer, beispielsweise zu einem Supermarkt oder zu einem sonstigen Verbraucher transportiert werden. Das zu transportierende Gut ist vorzugsweise auf Paletten oder auf Rollwagen gelagert. Die Streifenvorhänge sollen bewirken, dass bei geöffneter Ladebordwand der Kälteverlust so gering wie möglich ist.

Die bisher bekannten Kühlfahrzeuge sind mit drei Streifenvorhängen ausgestattet, d.h. die Anzahl der Streifenvorhänge stimmt mit der Anzahl der Kühlkammern überein. Darüber hinaus sind aber auch einteilige Vorhänge bekannt. Sofern das Kühlfahrzeug mit drei Streifenvorhängen versehen ist, können diese mit einer mechanischen Aufwickelvorrichtung zur Seite gezogen werden. Gleiches gilt auch für den Plattenvorhang.

Nachteilig ist jedoch, dass der die Be- und Entladung vornehmende Fahrer durch die 3-Streifen-Vorhänge oder durch den Plattenvorhang behindert wird. Da der Fahrer unter Zeitdruck steht, schiebt er alle Streifen-Vorhänge zu beiden Seiten oder nach rechts oder nach links. In der Praxis hat sich gezeigt, dass ca. 2/3 der Fläche der Ladeöffnung geöffnet ist, wodurch der Kälteverlust sehr hoch ist.

Der Erfindung liegt die Aufgabe zugrunde, ein Kühlfahrzeug der eingangs näher beschriebenen Art so zu gestalten, dass die Handhabung der Streifenvorhänge einfach und effektiv ist, so dass die Streifenvorhänge die Ladeöffnung nur zum Be- und Entladen freigeben, wobei der freigegebene Bereich der Ladeöffnung so gering wie möglich sein soll. Darüber hinaus soll der Fahrer nicht behindert werden.

Die gestellte Aufgabe wird gelöst, indem die Breite jedes Streifenvorhanges geringer ist als die Breiten der durch die Trennwände gebildeten Kühlkammern.

Diese höhere Anzahl der Streifenvorhänge bietet dem Fahrer den Vorteil, dass dieser mit einer sich aus der Anzahl der Streifenvorhänge ergebenden Schiebebewegung einen Streifenvorhang zur Seite schiebt, und das dieser in der Stellung fixiert wird. Der Fahrer kann dann ungehindert den Kofferaufbau begehen, kann auch Rollbehälter noch durchschieben, da die angrenzenden Streifen der beiden Streifenvorhänge ausweichen können. Sofern er eine Palette be- oder entladen muss, wird auch ein weiterer und angrenzender Streifenvorhang in die entgegengesetzte Richtung verschoben, so dass er die Palette einfahren oder herausziehen kann. Ferner ist die Anordnung so getroffen, dass er die äußeren Streifenvorhänge zur Seite schieben kann, d.h. zur Mitte hin, wenn er beim Beladen die Palette bzw. den Rollbehälter an einer der Seitenwände einfahren muss. In diesem Falle steht üblicherweise zwischen den Stirnkanten der Trennwände und der Ladeöffnung kein oder ein nicht nennenswerter Raum zur Verfügung.

In Weiterführung dieses Erfindungsgedankens ist vorgesehen, dass die Anzahl der Streifenvorhänge um einen Streifenvorhang größer ist als die Stückzahl der durch die Trennwände gebildeten Kühlkammern. Dadurch wird durch Verschieben eines der mittleren Streifenvorhänge ein Zugang bzw. Ausgang gebildet, um einen Rollbehälter ein- oder auszufahren. Werden zwei der mittleren Streifenvorhänge zur Seite geschoben, d.h. in entgegengesetzten Richtungen, wird auch eine Öffnung erreicht, die es problemlos ermöglicht Paletten ein- und auszuschieben.

Üblicherweise sind die Kühlfahrzeuge mit zwei sich in Längsrichtung des Kofferaufbaus erstreckenden Trennwänden versehen, so dass der Kofferaufbau in drei Kühlkammern unterteilt ist. Bei dieser Ausführung ist dann vorgesehen, dass der Kofferaufbau heckseitig mit vier Streifen-Vorhängen ausgerüstet ist.

In einer bevorzugten konstruktiven Ausführung ist vorgesehen, dass innenseitig an den Seitenwänden des Kofferaufbaus und unterhalb des Daches durch Stromdurchflutung erregbare Elektromagnete installiert sind, das diese in der Offenstellung der Ladebordwand und in der sie sich auf Höhe des Bodens des Kofferaufbaus befindet, erregbar sind, dass die mittleren Streifenvorhänge von der Schließlage manuell nach außen in die Offenstellung verschiebbar sind und in dieser Stellung durch den jeweiligen Elektromagneten gehalten sind. Der Fahrer kann dann in dieser Stellung der Ladebordwand entweder sämtliche mittleren Streifenvorhänge oder auch nur einen in Richtung zur zugeordneten Seitenwand verschieben und diese Stellung wird durch die Wirkung des jeweiligen Elektromagnetes gesichert.

Damit nach dem Absenken der beladenen Ladebordwand sichergestellt ist, dass die Streifenvorhänge die Schließlage erreichen, ist vorgesehen, dass zumindest während des Absenkens der beladenen Ladebordwand die Elektromagnete stromlos sind, und dass mittels einer mechanischen Zugvorrichtung der mittlere Streifenvorhang bzw. die mittleren Streifenvorhänge selbsttätig in die Schließlage verschiebbar sind. Es wird dann sichergestellt, dass die Streifenvorhänge den Kälterückhalt sichern. Sofern der Fahrer jedoch Leergut in den Kofferaufbau einschieben müsste, müsste er einen oder zwei Streifen-Vorhänge wiederum zur Seite schieben. In dieser Ausführung müsste jeder Elektromagnet wieder erregt werden, wenn die Ladebordwand auf Höhe des Bodens gefahren ist. Wenn die Ladebordwand in die Schließlage geschwenkt wird, sollten jedoch die Elektromagneten wieder stromlos sein. Dadurch würden die Zugvorrichtungen wieder aktiviert.

Eine konstruktiv einfache Lösung ist gegeben, wenn die jedem Streifenvorhang zugeordnete Zugvorrichtung ein elastisches Zugseil aufweist, welches durch die Verschiebebewegung in Richtung zu den Seitenwänden des Kofferaufbaus spannbar ist. Die von den Zugseilen aufgebrachten Rückstellkräfte müssen jedoch geringer sein als die von den Elektromagneten aufgebrachten Haltekräfte, damit die Streifenvorhänge von den Elektromagneten gehalten werden können.

Eine konstruktiv einfache Lösung für diese Zugvorrichtungen ergibt sich, wenn jedes Zugseil mit einem Ende an der dem funktionell zugeordneten Elektromagneten zugewandten Seite des Befestigungsvorhanges festgelegt und mit dem anderen Ende an der dem Elektromagneten gegenüberliegenden Seitenwand oder gegenüberliegend am Rand des Daches festgelegt ist. In der Schließstellung des jeweiligen mittleren Streifenvorhanges sollte das zugehörige Zugseil entweder ungespannt aber nicht durchhängend oder leicht vorgespannt sein, so dass durch die Verschiebebewegung die Zugspannung aufgebaut wird.

Damit die Schließstellungen der beiden mittleren Streifenvorhänge fixiert sind, ist vorgesehen, dass diese Schließbewegungen durch einen in der Mitte des Kofferaufbaus angeordneten Mittelanschlag begrenzt sind. Dabei ist es dann vorteilhaft, wenn der Mittelanschlag derart schwenkbar gelagert ist, dass er aus dem Verschiebeweg der mittleren Streifenvorhänge heraus bewegbar ist. Es ist dann im Bedarfsfalle in einfachster Weise möglich, beispielsweise alle Streifenvorhänge in Richtung zu einer Seitenwand zu verschieben. Der Mittelanschlag ist im oberen Bereich des Kofferaufbaus innenseitig montiert, so dass die die einzelnen Streifen haltende Schiene mit einer Stirnfläche zur Begrenzung der Schließbewegung gegen den Mittelanschlag fährt. Es ist ferner noch vorgesehen, dass die mittleren Streifenvorhänge gegenüber den äußeren Streifenvorhängen in Richtung zum Führerhaus versetzt sind.

Anhand der beiliegenden Zeichnungen wird die Erfindung noch näher erläutert.

Es zeigen:
- Figur 1: ein erfindungsgemäßes Kühlfahrzeug in einer Hinteransicht, den an das Dach angrenzenden Bereich zeigend,
- Figur 2: den Bereich gemäß der Figur 1 von unten zeigend mit geschlossenen Streifenvorhängen und
- Figur 3: den Bereich der Figur 1 von unten zeigend, bei dem die mittleren Streifenvorhänge zur Seite verschoben sind.

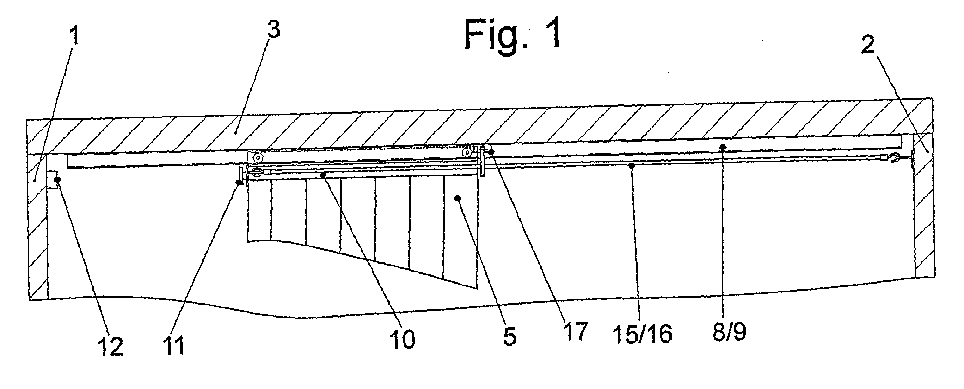

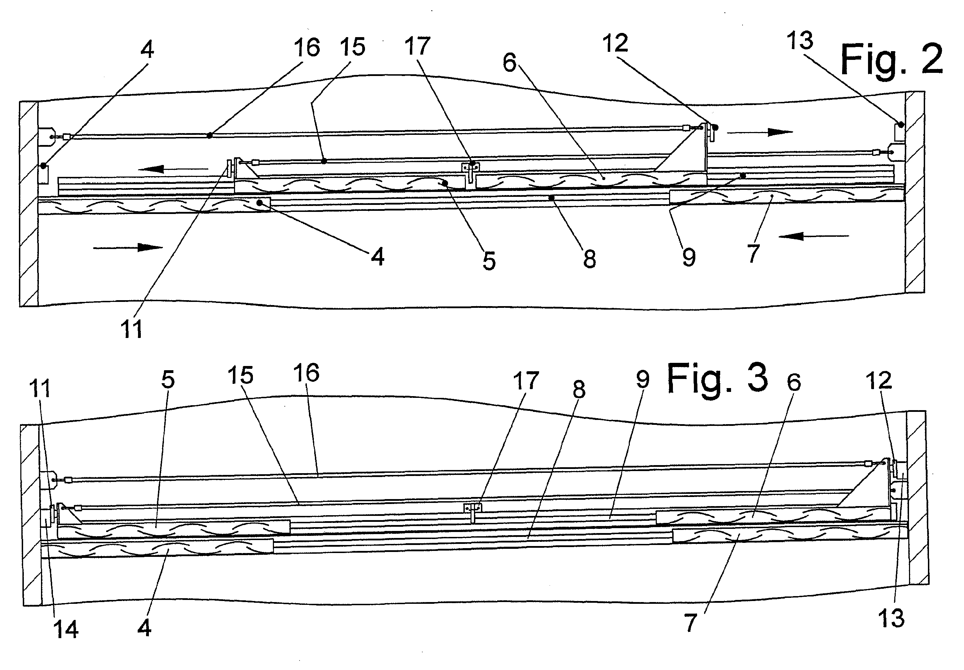

Aus Gründen der vereinfachten Darstellung ist das erfindungsgemäße Kühlfahrzeug nicht dargestellt. Das Kühlfahrzeug besteht aus einem allgemein bekannten Fahrgestell mit einem Führerhaus und einem auf das Fahrgestell aufgebauten Kofferaufbau, der im wesentlichen aus einem nicht dargestellten Boden, einer linken Seitenwand 1, einer rechten Seitenwand 2, einem Dach 3 und einer ebenfalls nicht dargestellten Ladebordwand besteht. Mittels der Ladebordwand wird die heckseitige Belade-Öffnung verschlossen, durch Schwenken wird sie geöffnet und steht dann auf Höhe des Bodens, so dass zu entladende Güter, beispielsweise Rollbehälter oder Paletten darauf abgestellt werden können. Die Ladebordwand wird dann abgesenkt, so dass das Gut abtransportiert werden kann. Das Beladen erfolgt in umgekehrter Reihenfolge. Im dargestellten Ausführungsbeispiel kann der Kofferaufbau durch zwei Längstrennwände in drei Kühlkammern unterteilt werden. Zur Kälterückhaltung bei geöffneter Ladebordwand ist im dargestellten Ausführungsbeispiel der heckseitige Bereich durch 4-Streifen-Vorhänge 4, 5, 6, 7 verschließbar, wie insbesondere die Figur 2 zeigt. Aus Gründen der vereinfachten Darstellung ist in der Figur 1 nur ein Streifenvorhang 5 dargestellt, der im Abstand zur linken Seitenwand 1 des Kofferaufbaus steht. Am Dach 3 des Kofferaufbaus sind am hinteren Rand zwei Führungsschienen 8, 9 befestigt, in denen Laufwagen 10 verschiebbar geführt sind, die die Streifenvorhänge 4 - 7 aufnehmen. Die Streifenvorhänge 4 - 7 bestehen aus mehreren Lamellen, die jeweils ein Viertel der Ladeöffnung abdecken, bezogen auf den in der Figur 2 dargestellten Zustand. An den beiden mittleren Laufwagen 10 der Streifenvorhänge 5, 6 sind an der der linken Seitenwand 1 und der rechten Seitenwand 2 zugeordneten Seite Magnetplatten 11, 12 befestigt.

Lagegerecht zu den Magnetplatten 11, 12 sind an den beiden Seitenwänden an den Innenseiten erregbare Elektromagnete 13, 14 festgelegt. Wie insbesondere die Figur 3 zeigt, werden die mittleren Streifenvorhänge 5, 6 durch diese Elektromagnete 13, 14 in der Offen-Stellung gehalten, sofern die Ladebordwand auf Höhe des Bodens des Kofferaufbaus steht. Die Steuerung ist so ausgelegt, dass in dieser Stellung der Ladebordwand die Elektromagnete 13, 14 erregt werden. Sofern der Fahrer des Kühlfahrzeuges das Öffnen der Ladebordwand eingeleitet hat, und die besagte Stellung erreicht ist, werden die Elektromagnete 13, 14 erregt. Der Fahrer hat dann die Möglichkeit, entweder nur einen mittleren Streifenvorhang 5 oder 6 in Richtung zur linken bzw. rechten Seitenwand 1, 2 zu verschieben. In den meisten Fällen reicht für das Laden die dann hergestellte Öffnung aus. Sofern er jedoch Paletten be- oder entladen muss, werden beide mittlere Streifenvorhänge 5, 6 zur Seite geschoben, wie die Figur 3 zeigt.

Leitet der Fahrer das Absenken der Ladebordwand ein, werden die Elektromagnete 13, 14 stromlos geschaltet. Die Magnetwirkung wird dann aufgehoben. Wie die Figuren zeigen, sind an den beiden mittleren Streifenvorhängen 5, 6 an den den Seitenwänden 1, 2 zugewandten Seiten zwei Zugseile 15, 16 eingehängt. Die anderen Enden der Zugseile 15, 16 sind in Laschen eingehängt, die an den Seitenwänden 1, 2 befestigt sind. Die Zugseile 15, 16 sind aus einem elastischen Material. Die Längen sind so ausgelegt, dass in der Schließlage der mittleren Streifenvorhänge 5, 6 die Zugseile 15, 16 ungespannt oder nur schwach gespannt sind. Es ergibt sich insbesondere aus der Figur 2, dass die Zugseile 15, 16 gespannt werden, wenn die zugehörigen Streifenvorhänge 5, 6 in Richtung zu der zugehörigen Seitenwand 1 oder 2 verfahren werden. Die Zugkraft ist jedoch nur so groß, dass die erregten Elektromagnete 13, 14 die Streifenvorhänge 5, 6 in der Offen-Stellung halten. Sobald jedoch die Elektromagnete 13, 14 stromlos sind, werden die Zugseile 15, 16 entspannt und ziehen die mittleren Streifenvorhänge 5, 6 in die in der Figur 2 dargestellte Schließlage.

Für den Fahrer des Kühlfahrzeuges ist stets sichergestellt, dass beim Abtransport der zunächst auf der Ladebordwand abgestellten Güter das Heck des Kühlfahrzeuges verschlossen ist, ohne dass er Handgriffe tun muss. Das erfindungsgemäße Kühlfahrzeug könnte auch so bezeichnet werden, dass es mit einer automatischen Schließvorrichtung ausgestattet ist. Auch beim Beladen der abgesenkten Ladebordwand ist das Heck stets geschlossen. Sobald jedoch die Ladebordwand auf Höhe des Bodens steht, werden die Elektromagnete 13, 14 erregt und der Fahrer kann entweder eines der mittleren Streifenvorhänge 5 oder 6 oder auch beide Streifenvorhänge zur Seite schieben. Sie sind dann wiederum durch die Elektromagnete 13, 14 gehalten. Die Schließstellungen der mittleren Streifenvorhänge 5, 6 sind durch einen Mittelanschlag 17 begrenzt, gegen den der jeweilige Laufwagen 10 durch die Wirkung des Zugseiles 15, 16 anläuft. Dieser Mittelanschlag 17 ist um eine horizontale Achse schwenkbar, so dass er aus dem Verfahrweg der beiden mittleren Streifenvorhänge 5, 6 herausgeschwenkt werden kann. Es ist dann möglich, den Streifenvorhang 5 oder 6 über die Endstellung hinauszuschieben.

Die Erfindung ist nicht auf das dargestellte Ausführungsbeispiel beschränkt. Wesentlich ist, dass bei einem Kühlfahrzeug mit 2 Trennwänden bzw. 3 Kühlkammern die heckseitige Ladeöffnung durch vier Streifen-Vorhänge 4-7 verschließbar ist, sofern die Ladebordwand nicht auf Höhe des Bodens des Kofferaufbaus steht. Ferner ist von besonderer Bedeutung, dass über die Zugvorrichtung 15, 16 die mittleren Streifenvorhänge 5, 6 in die Schließlage gezogen werden, sobald die Ladebordwand nicht auf Höhe des Bodens des Kofferaufbaus steht.

## Patentansprüche

1. Kühlfahrzeug mit einem Kofferaufbau, der durch mehrere in Längsrichtung verlaufende Trennwände in Kühlkammern unterteilbar ist, und welches heckseitig mit einer Ladebordwand ausgestattet ist, die in eine die heckseitige Ladeöffnung verschließende und freigebende Stellung bringbar sowie zum Be- und Entladen anheb- und absenkbar ist, und welches außerdem zur Kälterückhaltung mit mehreren, innerhalb der Ladeöffnung verschiebbaren Streifenvorhängen (4, 5, 6, 7) versehen ist, die am Dach (3) des Kühlfahrzeugs in Führungsschienen (8, 9) frei hängend verschiebbar geführt sind, **dadurch gekennzeichnet, dass** die Breite jedes Streifenvorhanges (4, 5, 6, 7) geringer ist als die Breiten der durch die Trennwände gebildeten Kühlkammern.

2. Kühlfahrzeug nach Anspruch 1, **dadurch gekennzeichnet, dass** die Zahl der Streifenvorhänge (4, 5, 6, 7) um einen Streifenvorhang größer ist als die Anzahl der durch die Trennwände gebildeten Kühlkammern.

3. Kühlfahrzeug nach Anspruch 1 oder 2, **dadurch gekennzeichnet, dass** das Kühlfahrzeug durch zwei sich in Längsrichtung des Kofferaufbaus erstreckende Trennwände in drei Kühlkammern unterteilt ist, und der Kofferaufbau heckseitig mit vier Streifen-Vorhängen (4, 5, 6, 7) ausgerüstet ist.

4. Kühlfahrzeug nach einem oder mehreren der vorstehenden Ansprüche 1- 3, **dadurch gekennzeichnet, dass** innenseitig an den Seitenwänden (1, 2) des Kofferaufbaus und unterhalb des Daches (3) durch Strombeaufschlagung erregbare Elektromagnete (13, 14) installiert sind, dass die mittleren Streifenvorhänge (5, 6) von der Schließlage manuell nach außen in die Offenstellung verschiebbar sind, und in dieser Stellung durch die Elektromagnete (13, 14) gehalten sind.

5. Kühlfahrzeug nach Anspruch 4, **dadurch gekennzeichnet, dass** zumindest während des Absenkens der beladenen Ladebordwand die Elektromagnete (13, 14) stromlos sind, und dass mittels einer mechanischen Zugvorrichtung (15, 16) der mittlere Streifenvorhang (5 oder 6) bzw. die mittleren Streifenvorhänge (5, 6) selbsttätig in die Schließlage verschiebbar sind.

6. Kühlfahrzeug nach Anspruch 5, **dadurch gekennzeichnet, dass** die jedem mittleren Streifenvorhang (5, 6) zugeordnete Zugvorrichtung ein elastisches Zugseil (15, 16) aufweist, welches durch die Verschiebebewegung in Richtung zu den Seitenwänden (1, 2) des Kofferaufbaus spannbar ist.

7. Kühlfahrzeug nach Anspruch 6, **dadurch gekennzeichnet, dass** jedes Zugseil (15, 16) mit einem Ende an der dem funktionell zugeordneten Elektromagneten (13, 14) zugewandten Seite des Streifenvorhanges (5, 6) befestigt und mit dem anderen Ende an der dem Elektromagneten gegenüberliegenden Seitenwand (2, 1) oder gegenüberliegend am Rand des Daches (3) festgelegt ist.

8. Kühlfahrzeug nach einem oder mehreren der vorstehenden Ansprüche 1- 7, **dadurch gekennzeichnet, dass** die Schließstellungen der beiden mittleren Streifenvorhänge (5, 6) durch einen in der Mitte des Kofferaufbaus angeordneten Mittelanschlag (17) begrenzt sind.

9. Kühlfahrzeug nach Anspruch 8, **dadurch gekennzeichnet, dass** der Mittelanschlag (17) derart schwenkbar gelagert ist, dass der Verschiebeweg der mittleren Streifenvorhänge (5, 6) frei ist.

10. Kühlfahrzeug nach einem oder mehreren der vorstehenden Ansprüche 1- 9, **dadurch gekennzeichnet, dass** die mittleren Streifenvorhänge (5, 6) gegenüber den äußeren Streifenvorhängen (4, 7) in Richtung zum Führerhaus des Kühlfahrzeuges versetzt sind.
